# EUROPEAN PATENT APPLICATION

(11) **EP 1 205 525 A1**
(43) Date of publication of application: **15.05.2002**
(21) Application number: 00946279.7
(22) Date of filing: 12.07.2000
(51) Int. Cl.: C09K 3/12, C09K 3/10, E04B 1/68, C08L 101/14, C08K 5/053

(54) **WATER LEAKAGE PREVENTIVE AGENT, WATER LEAKAGE PREVENTIVE MATERIAL MADE WITH THE SAME, AND METHOD OF PREVENTING WATER LEAKAGE**

(30) Priority: 15.07.1999 JP 20127799; 23.07.1999 JP 20855699; 22.10.1999 JP 30059299; 17.11.1999 JP 32671899; 26.11.1999 JP 33523499
(71) Applicant: Nippon Kayaku Kabushiki Kaisha, Tokyo 102-8172 (JP)
(72) Inventor: ITO, Yuji, Takasaki-shi, Gumma 370-1208 (JP); IGUCHI, Tutomu, Takasaki-shi, Gumma 370-1201 (JP); YAMAUCHI, Yuji, Takasaki-shi, Gumma 370-1208 (JP); KURODA, Yasuo, Usui-gun, Gumma 379-0225 (JP); HAYASHI, Muneyuki, Takasaki-shi, Gumma 370-1208 (JP); YAHAGI, Chieko, Takasaki-shi, Gumma 370-1208 (JP); TAMURA, Wakako, Fujioka-shi, Gumma 375-0054 (JP); YAMASAKI, Takemichi, Omiya-shi, Saitama 330-0002 (JP)
(74) Representative: Gille Hrabal Struck Neidlein Prop Roos
(86) International application number: JP0004659
(87) International publication number: WO0105904

(57) **Abstract**

An object of the present invention is to provide a leakage water cut-off agent that has an excellent power to close a water leakage site with simple and labor-saving process and without any damaged appearance of a construction.

A leakage water cut-off agent of the present invention comprises (a) a water-absorptive polymer and (b)alkylene glycol derivatives having a 2C or more repeated unit as the indispensable components, and contains a gellant for the water-absorptive polymer and/or a storage stabilizer as the optional components. The leakage water cut-off agent of the present invention can be used to coat on or infiltrate into a spongy substance, string, rope, film, sheet, cloth, unwoven cloth or the like.

## Description

### TECHNICAL FIELD

The present invention relates to a leakage water cut-off agent having a good water leakage blocking capability and the use thereof, more particularly to a leakage water cut-off agent that can penetrate into cracks or holes causing water leakage, and fill the gaps to prevent water from invading into them; a leakage water cut-off material containing the same; and a method for cut-off leakage water by spreading the leakage water cut-off agent over/injecting the leakage water cut-off agent into the roof, the floor or the wall of a building.

### BACKGROUND ART

To prevent water leakage in a roof, a floor or a wall, the water leakage sites such as a hole, a crack and a gap must be coated or filled with a sealant. If the leakage sites cannot be specified, the whole restoration is required such as re-roofing, replacing a waterproof sheet, complete spray coating or re-tiling of the wall. Namely the simple maintenance such as coating or filling with the sealant is not sufficient enough, because of the difficulty in specifying the leakage sites.

No leakage guarantee term is often as long as 5 to 10 years. The constructor within the guarantee term and, after the expiration of the term, either the owner or constructor is obliged to bear the costly expense for repairing.

The joint in a concrete construction is often water-proofed with asphalt or urethane. But, if the joint surface is dewy or wetted when operated by the asphalt or urethane, it loses an adhesion property, namely loses the capability to block water leakage. Therefore, the joint surface must be completely dried when the water -proof joint is applied. Incompletely dryness in a part of the joint surface would cause water leakage.

In this connection, JP No.96672/1995 discloses a rainwater leakage blocking agent for spreading which is manufactured by mixing a high water absorptive polymer and a water-insoluble powdery substance with water, and a method for sealing a water-leaking crack with the water-insoluble powdery substance by spreading the said agent over a rainwater-leaking sites. However, the said agent manufactured by dissolving a high water absorption polymer is likely to have difficulty in penetrating sufficiently into a leakage site such as cracks because its viscosity is uncontrollable and sometimes shows high viscosity.

WO99/29798 discloses a penetrating water cut-off agent containing a gelable resin and a gellant as the main components, and a leakage water leakage cut off material manufactured by infiltrating the same agent in a spongy substance. The said penetrating waterproofing agent has an excellent waterproofing effect. However, further improvement has been desired because it often meets troubles in viscosity adjustment or gel storage stability.

The present invention is intended to find out a leakage water cut-off agent which is easy to apply, easy to adjust in viscosity, and excellent in storage stability.

### DISCLOSURE OF INVENTION

The present inventors made a diligent study to solve the above problems and, as a result, have found out that a water-absorptive polymer powder can be unexpectedly dispersed in the aqueous high concentration solution of polyalkylene glycol derivatives to give a stable dispersion in which the polymer powder absorbs almost no water or a little only to swell on its surface and that it absorbs substantially to swell only when it contacts with more than a certain amount of water. This finding led the completion of the present invention. Namely, the present invention relates to the followings.
(1) A leakage water cut-off agent comprising (a) a water-absorptive polymer dispersed without swelling in (b) a dispersing medium containing alkylene glycol derivatives having repeated units of 2 carbon atoms or more as the indispensable component.
(2) A leakage water cut-off agent according to the above item (1) comprising (c) a gellant of water-soluble polymer.
(3) A leakage water cut-off agent according to the above item (1) or (2), wherein said gellant is a compound which can release a 2 or more valences of metal cation in water or has a cation-exchange capacity in water.
(4) A leakage water cut-off agent according to the above item (1) or (2) comprising a storage stabilizer.
(5) A leakage water cut-off agent according to any one of the above item (1) to (4), wherein said water-absorptive polymer contains both a high water-absorptive polymer and a water-absorptive natural polymer.
(6) A leakage water cut-off agent according to the above item (5), wherein said high water-absorptive polymer is at least one selected from the group consisting of poly (meth)acrylic acid derivatives, alginic acid derivatives, starch derivatives, poly-N-vinylacetamide derivatives, polyvinylalcohol derivatives and cellulose derivatives.
(7) A leakage water cut-off agent according to the above item (5) or (6), wherein said water-absorptive natural polymer is at least one selected from the group consisting of alginic acid, sodium alginate and guar gum.
(8) A leakage water cut-off agent according to any one of the above item (1) to (7), wherein said alkylene glycol derivatives comprise at least one selected from the group consisting of polyethylene glycol, polypropylene glycol and polybutylene glycol.
(9) A leakage water cut-off agent according to any one of the above item (1) to (8) further comprising water.
(10) A method for manufacturing the leakage water cut-off agent according to the above item (9) characterized by that (a) said water-absorptive polymer is added to disperse in the aqueous solution of (b) said alkylene glycol derivative having repeated units of 2 carbon atoms or more.
(11) A leakage water cut-off material characterized by that the leakage water cut-off agent according to any one of the above item (1) to (10) is infiltrated in a spongy substance.
(12) A leakage water cut-off material according to the above item (11), wherein said spongy substance is at least one selected from the group consisting of an urethane foam, a silicon resin foam, a synthetic rubber foam and a cellulose sponge.
(13) A leakage water cut-off material comprising at least one selected from the group consisting of string, rope, film, sheet, cloth, unwoven fabric and paper, which is coated or infiltrated by the leakage water cut-off agent according to any one of the above item (1) to (10).
(14) A method for preventing water leakage characterized in that the leakage water cut-off material according to any one of the above item (11) to (13) is placed to the water leakage pathway of a construction.
(15) A method for preventing water leakage according to the above item (14), wherein said water leakage pathway is a joint surface or a faying surface of concrete.
(16) A method for preventing water leakage characterized by that the leakage water cut-off agent according to any one of the above item (1) to (10) is injected into the injecting openings set in a concrete construction.
(17) A method for preventing water leakage according to the above item (16), wherein said injecting openings, are set in zigzag along the both sides of a crack.

### BRIEF DESCRIPTION OF THE DRAWINGS

Fig.1 shows one example of a concrete container.
Fig.2 shows one of the bisecting pieces of the concrete container of Fig.1
Fig.3 shows a water leakage test container in which the two bisecting pieces of the concrete container of Fig.1 are fixed with a wire.
Fig.4 is a cross-section in the case that an opening for a leakage water cut-off agent is formed on a joint to waterproof.

The numbers given in those drawings show the followings:
1: Concrete container
2: Seam
3: Wire
4: Opening for injecting a leakage water cut-off agent
5: Heat-insulating material holding concrete
6: Heat-insulating material of styrene foam
7: reinforced slab concrete
8: Asphalt waterproofing joint

### BEST MODE OF CARRYING OUT THE INVENTION

The present invention will be described in detail below. The word "part" shows "part by mass", unless otherwise stated, in the description.

The water-absorptive polymer ((a) component) to use in the present invention has a performance that it, as in the particle state, can enter a water leakage site such as hole, crack and crevice with other components, then absorb water, swell, and close the site. The water-absorptive polymer is not limited to any particular one as long as it can absorb water to swell for a relatively short time to play the role of a leakage water cut-off agent of the present invention. A synthetic polymer, a natural polymer and a half-synthetic polymer may be used for. Both a cross linking type and a non-cross linking type of polymer may be used for. These polymers may be used alone or in a combination of two or more. The combination of a cross linking type and a non-cross linking type of polymers may be used. Any water-absorptive polymer, from a polymer having a swelling degrees by weight of as low as a couple-tens times to a highly water-absorptive polymer having that of as high as several tens-hundreds times, may be used depending on their usages.

The high water-absorptive polymer include a (half-) synthetic polymer which includes poly(meth)acrylic acid derivatives such as a polyacrylic acid alkali metal salt, sodium (meth)acrylate-vinyl alcohol copolymers ( methyl(meth)acrylate-vinyl acetate copolymer-saponificated products), poly(meth)-acrylonitrile polymer-saponificated products, a hydroxyethyl methacrylate polymer and poly(meth)acrylamide; cellulose derivatives such as carboxymethylcellulose alkali metal salt; polyacrylamide; alginic acid derivatives such as sodium alginate and propylene glycol alginate; starch derivatives such as sodium starch glycolate, sodium starch phosphate and a starch-acrylic acid salt graft copolymer; poly-N-vinylacetoamide derivatives such as a N-vinylacetoamide polymer; polyvinyl alcohol derivatives such as polyvinyl alcohol, polyvinyl formal and polyvinyl acetal. Among these highly water-absorptive polymers, poly(meth)acrylic acid derivatives are preferable. Sodium poly(meth)acrylate or carboxymethylcellulose (alkali metal salt) is especially preferable.

The term "a (half-) synthetic polymer" in this description shows any of a synthetic polymer and a half-synthetic polymer. The term "(meth)acrylic acid" shows any of acrylic acid and methacrylic acid.

The usable water-absorptive polymer having a lower swelling degree than the above polymer is a natural polymer which includes guar gum, alginic acid, sodium alginate, potassium alginate, *konjak*, agar, *funori,* gelatin and glue. Alginic acid, sodium alginate or guar gum is preferable. These may be used alone and, if used in combination with the above high water-absorptive polymer, gives a favorable result according to the case. One or more natural polymers are in some cases used in combination with one or more highly water-absorptive (half-)synthetic polymers to display an excellent waterproof effect against inorganic salt-rich water such as seawater. This combination is not limited to any particular one, but sodium polyacrylate or polyacrylic acid is preferable as the (half-)synthetic polymer to use in the combination, and alginic acid, sodium alginate or guar gum is preferable as the natural polymer to use in the combination. In the combination, the natural polymer is generally mixed in a rate of 20-1,000 parts, preferably 50-500 parts relative to 100 parts of the (half-)synthetic polymer.

The water-absorptive polymer is better not to be so large a particle but preferably a small particle to powdery form, because it is to be dispersed in a dispersion medium in almost non-swelling or not so much swelling state and has to be carried to a water leakage site kept in that state. The particle size is 0.1-700µ, preferably 1-200µ, and more preferably about 5-100µ.

The water-absorptive polymer is generally added in 0.1-35 parts, preferably 0.4-10 parts relative to 100 parts of the dispersion medium.

The state that the water-absorptive polymer is "dispersed in the non-swelling state" in the present invention includes a state that the polymer is more or less swelling to such a degree as may not substantially hinder the polymer particle from dispersing in the dispersion medium. It is because such a swelling degree does not block the effect of the present invention and may be considered to be substantially a non-swelling state.

An alkylene glycol derivative ((b) component) having repeated units of 2 carbon atoms or more to use as the indispensable dispersion medium in the leakage water cut-off agent of the present invention has a role to prevent the water-absorptive polymer from swelling, keep the viscosity of leakage water cut-off agent of the present invention low, decrease the friction resistance in order the leakage water cut-off agent to penetrate or flow into a leakage route and carry the water-absorptive polymer to the leakage route in the non-swelling state. Therefore, the leakage water cut-off agent of the present invention can penetrate even into a little crack smoothly, resulting in an excellent effect on water leakage prevention as the water-absorptive polymer closes the water leakage sites by swelling with invading rainwater, etc..

The alkylene glycol derivatives ((b) component) having repeated units of 2 carbon atoms or more to use have generally a few or more, preferably 10 or more, more preferably 30 or more, and further more preferably 100 or more repeated units and the upper limit, though not been able to be defined clearly as varies depending on the types of alkylene glycol, is generally about 1,000 or less, and preferably about 500 or less. The preferable alkylene glycol derivatives have a molecular weight of, though not specifically limited to, 1,000 or more with no surface-active effect.

The alkylene group in the alkylene glycol derivatives to use generally have 2 or more and 10 or less, preferably of about 2-4 carbons. The usable alkylene glycol derivatives include an ethylene glycol derivative such as polyethylene glycol, polyethylene glycol diglycidyl ether, polyethylene glycol aliphatic acid ester, a higher alcohol ethylene oxide adduct, alphaphenol ethylene oxide adduct, an aliphatic acid ethylene oxide adduct, a polyalcohol aliphatic acid ester ethylene oxide adduct, a higher alcoholamine ethylene oxide adduct, a fat ethylene oxide adduct or a polypropylene glycol ethylene oxide adduct: propylene glycol derivatives such as propylene glycol and a polypropylene glycol polyethylene glycol block polymer; and butylene glycol derivatives such as polybutylene glycol. Polyethylene glycol, polypropylene glycol and polybutylene glycol are preferable. These may be used alone or in combination of two or more.

The leakage water cut-off agent of the present invention can be obtained by adding to disperse the water-absorptive polymer under stirring in the dispersion medium containing the alkylene glycol derivatives having repeated units of 2 carbon atoms or more as the indispensable component.

The alkylene glycol derivatives, if they are liquid having a low viscosity, can be used alone, but if they are viscous liquid or solid such as wax, are preferably adjusted in the viscosity by adding water to use as a mix dispersion medium with water. The mix ratio of the alkylene glycol derivatives and water in the dispersion medium varies depending on the type of the alkylene glycol derivative and the type of the water-absorptive polymer to use. The mix ratio needs to adjust the viscosity of the leakage water cut-off agent of the present invention within an appropriate range so as to inhibit the water-absorptive polymer in the dispersion medium from absorbing water to swell and keep the dispersion in a stable state. The alkylene glycol derivatives must have the concentration beyond a specific level depending on the type in order to inhibit the water-absorptive polymer from absorbing water to swell. The concentration can be determined by a simple preliminary test that the water-absorptive polymer is dispersed in the prepared several concentrations of the aqueous alkylene glycol derivatives solutions to observe. The concentration of the alkylene glycol derivatives is generally 15% by mass or more relative to the whole dispersion medium, (hereinafter the same, unless otherwise stated) preferably 25% by mass or more, more preferably 30% by mass or more, most preferably 35% by mass or more.

The leakage water cut-off agent of the present invention is preferably manufactured by the following way if it contains water.

The alkylene glycol derivatives are dissolved to prepare the aqueous solution, in which the water-absorptive polymer is then added to disperse under stirring to obtain the leakage water cut-off agent of the present invention. The agent has preferably a viscosity of 3,000cP or less. So, the mix ratio of water is preferably adjusted to get such a viscosity. The viscosity is more preferably 2,000cP or less. A low viscosity is preferable in view of the fluidity, but if it is too low the water absorption occurs in the water-absorptive polymer. So, the preferable viscosity is 200cP or more, more preferably 300cP or more.

Other manufacture procedures than the above are not preferable because they may bring swelling and dissolution of the water-absorptive polymer and give a very viscous liquid.

The aqueous solution of the alkylene glycol derivatives may be prepared by any procedures. However, it is usually preferred to add alkylene glycol derivatives to dissolve in water under stirring to obtain the said aqueous solution.

A leakage water cut-off agent of the present invention containing a gellant ((c)component) for gelatinizing the water-absorptive polymer and/or a decomposition inhibitor ((d)component) of an organic substance will be described below.

The gellant ((c)component) for gelatinizing the water-absorptive polymer(hereinafter simply called the gellant) is not limited to any particular one provided that it can bond chemically or physically with the water-absorptive polymer to gelatinize when the polymer absorbs water to swell or dissolve. The preferable compound is usually what can give 2 or more valent metal cations in water or can have a cation-exchange power in water. The gellant can be simply determined by observing whether the viscosity of the solution of a water-soluble polymer, which is dispersed or dissolved in water, increase or not after adding a test compound. Namely, an increase of viscosity would show that it has a gelatinizing ability, and no increase of viscosity would show the reverse.

A specific example of the gellant ((c)component) includes a polyvalent metal silicate, a water-soluble alkali-earth metal salt, an alum, a water-soluble aluminium salt, a water-soluble iron salt, a water-soluble manganese salt, a water-soluble zinc salt and an alkali-earth metal oxide, which can give their metal ions in water in amount enough to have the gelatinizing ability. The polyvalent metal silicate is an aluminium silicate, a calium silicate or the like, including a Ca type silicate salt (a silicate mineral) such as bentonite, montmorillonite or smectite. The Ca type silicate salt (Silicate Mineral) such as bentonite, montmorillonite or smectite in the present invention means silicate salt having a relatively higher calcium content, which is preferably 1-2% by weight or more in terms of CaO relative to the whole weight of the bentonite, montmorillonite or smectite. The water-soluble alkali-earth metal salt includes the alkali-earth metal salt of a 1-3C organic acid, an inorganic acid or the like, for example, calcium acetate, calcium chloride, calcium nitrate, magnesium acetate, magnesium chloride, magnesium nitrate and magnesium sulfate. The alum includes aluminium potassium alum and an iron alum. The water-soluble aluminium salt includes aluminium lactate, aluminium acetate, aluminium chloride, aluminium sulfate, and aluminium nitrate. The water-soluble iron salt includes iron acetate, iron chloride, iron sulfate and iron nitrate. The water-soluble manganese salt includes manganese acetate, manganese chloride and manganese sulfate. The water-soluble zinc salt includes zinc acetate, zinc chloride, zinc nitrate and zinc sulfate. The alkali-earth metal oxide includes magnesium oxide and calcium oxide. The preferable one includes bentonite, montmorillonite, smectite, magnesium acetate, calcium acetate, aluminium lactate, aluminium acetate, and aluminium sulfate.

The gellant is added in 0-4,000 parts, preferably 20-3,000 parts, more preferably 50-2,000 parts relative to 100 parts (by mass: hereinafter the same, unless otherwise stated) of water-absorptive resin.

The gel formed by the gellant closes water leakage sites such as hole, crack and crevice, and then no more flow away by dissolving in water because it is insoluble in water. Therefore, it is preferable.

The water-absorptive polymer, if it does not dissolve in water but absorbs water to swell into a gel for itself, does not always need a gellant.

A storage stabilizer ((d) component) is preferably used in the leakage water cut-off agent to suppress the change of its viscosity and increase its storage stability. The storage stabilizer is not limited to any particular one provided that it has an effect to prevent change of quality such as change of viscosity in the agent.

The causes of change of quality such as change of viscosity during the storage of the leakage water cut-off agent of the present invention considered as the decomposition of an organic substance in the agent by ultraviolet ray absorption, oxidation or infection of a bacteria or fungi. The substance that can prevent the organic substance from decomposition is useful as one of the above storage stabilizers. The storage stabilizer includes an ultraviolet-absorptive agent such as a salicylic acid compound, a benzophenone compound, a benzotriazole compound and a cyanoacrylate compound; an antioxidant such as dibutylhydroxy toluene, erysorbic acid, sodium erysorbate, isopropyl citrate, α-tocopherol, nor- dihydroguaiaretic acid, and propyl butylhydroxyanisol gallate; and a bactericide or a fungicide such as sorbic acid, potassium sorbate, sodium benzoate, dehyeroacetic acid, sodium dehydroacetate, calcium propionate, sodium propionate, isobutyl p-oxybenzoate, isopropyl p-oxybenzoate, ethyl p-oxybenzoate, butyl p-oxybenzoate, propyl p-oxybenzoate, o-phenylphenol and thiabendazol. These may be used alone or in combination of two or more and have preferably no influence on the viscosity or the performance of the leakage water cut-off agent.

The storage stabilizer is generally mixed in 0.01-5 parts, preferably 0.1-2 parts relative to 100 parts of the alkylene glycol derivatives ((b) component).

The leakage water cut-off agent of the present invention containing (c) component and/or (d) component can be manufactured by adding to mix (c) component and/or (d) component in the dispersion solution of the water-absorptive polymer as prepared above without these components to use. Water, also in this case, may be added to adjust the leakage water cut-off agent to have a viscosity of 3,000cP or less. But an attention must be paid to the amount of water to add because too much water causes swelling of the water-absorptive polymer.

A water-insoluble powdery substance, fiber or scale may be mixed if necessary in the leakage water cut-off agent of the present invention in order to increase the closing power of the agent against a water leakage site. An organic powdery substance, an inorganic powdery substance, an organic fibrous substance or an inorganic fibrous substance may be used for the water-insoluble powdery substance, fiber or scale. A substance such as an inorganic powdery substance that is hardly deteriorated by oxygen, light or microorganism is preferable. The powdery substance has preferably a wide and uniform diffusion in particle size of 0.001µm-1mm. The fibrous substance has preferably a length of about 1µm-2mm. The scale substance has preferably a diameter of about 0.5-3mm.

The specific example includes silica sol, silica powder, rosin powder, resin particle, clay, wood powder, pulp fiber, fibrous zinc oxide, bermulite, pearlite and mica. These may be used alone or in mixture of two or more. The mixture of two or more has preferably a combination having a wide diffusion of particle size.

The water-insoluble powdery substance, fiber or scale is generally mixed in 1-20 parts relative to 100 parts of (b) component. When the silica sol is used as the water-insoluble powdery substance, the amount is in the above range in terms of the solid content. When the water-insoluble powdery substance, fiber or scale is used, it is preferable to be added after mixing the (a)-(d) components.

A preferable composition of the leakage water cut-off agent of the present invention thus obtained is as described below. Each component has a rate in terms of % by mass relative to the whole permeable water cut-off agent.
(1) The polyethylene glycol derivatives: 20% or more, preferably 30% or more, and 99% or less, preferably 80% or less, more preferably 70% or less.
(2) The water-absorptive polymer: 0.5% or more, preferably 1% or more, more preferably 1.5% or more, and 20% or less, preferably 10% or less, more preferably 5% or less.
(3) The gellant for the water-absorptive polymer: from 0% to 30%, preferably 20% or less.
(4) The storage stabilizer: 0% or more, preferably 0.005% or more, more preferably 0.05% or more, further preferably 0.1% or more, and 4% or less, preferably 2% or less.
(5) The other additive: 0% or more, and 30% or less, preferably 20% or less.
(6) Water: the remainder

If the place of a water invading hole can be guessed, the leakage water cut-off agent of the present invention thus obtained can be spread around the hole or injected into the hole through an opening set. If a invading water leakage site is not apparent, the agent may be either spread over the whole surface of the possible roof, floor or wall uniformly or injected into the openings set in there. It is not necessary to coat all over the roof, floor or wall.

The injecting opening has a role to be a pathway from the construction surface to the body thereof through which the leakage water cut-off agent can arrive at the body of the construction directly. The injection opening and pathway may have any shape and size if it allows the agent to arrive at the water leakage site. The injecting openings are preferably set in zigzag along the both sides of a crack. The injecting openings are preferably set considering the pitch and the angle so that the pathways may pass through the crack alternately in the possible deepest section of the construction body. As the result, the leakage water cut-off agent can be injected sufficiently in the body, enabling the complete close of the water leakage site.

The pitch of an opening is determined by the thickness of a body of concrete etc.. The openings having a pitch of 25-40cm are preferably bored in zigzag if the body has a thickness of 120-40cm. The openings are preferably bored directly on top of the crack if the body has a thickness of 40cm or less. If the crack is wide the agent is preferably injected through the opening having a short pitch of 10-20cm after the crack is blinded with a quick-solidifying cement or is blocked with an epoxy resin because the agent flows out from the wide crack.

The concrete outer wall of a construction is generally covered with waterproofing jointing asphalt and then veneered or tiled. An injecting opening is preferably bored to help the leakage water cut-off agent arrive at the waterproofing joint directly. The injecting opening may cut in the joint of the veneer or the tile. In this case, the leakage water cut-off agent can penetrate into the crack formed between the waterproofing joint and the concrete to prevent water leakage.

The construction laid underground usually suffers from a water leakage caused by ground water. An injecting opening is preferably bored to help the leakage water cut-off agent arrive at the waterproofing joint in the outer side of the construction laid underground.

The leakage water cut-off agent of the present invention is preferably applied to a reinforced concrete flat roof. The roof is generally prepared with a combination of concrete joint waterproofing and membrane waterproofing such as asphalt waterproofing, sheet waterproofing and coated membrane waterproofing. So, the agent may be spread over a waterproofing layer.

The leakage water cut-off agent of the present invention is preferably applied to a naked concrete floor. Even if the floor is covered with mortar, a coating material or a sheet, the agent may be spread over it.

The leakage water cut-off agent of the present invention is preferably applied to a wall that is prepared with cement mortar, sprayed acryl lysine, tile, brick, naked concrete or the like.

The leakage water cut-off agent of the present invention can be coated on or infiltrated in string, rope, film, sheet, cloth, unwoven cloth, paper or the like to manufacture a leakage water cut-off material. To manufacture the material, as the viscosity or fluidity of the agent has almost no need to be taken into account, the material can be manufactured with any leakage water cut-off agent prepared by mixing the above components uniformly in their prescribed rates. The components in this case may be mixed by an optional order. The leakage water cut-off agent may be coated on or infiltrated in string, rope, film, sheet, cloth, unwoven cloth or paper by any method. The agent may be coated using a coating machine and then dried. The agent may be coated on or infiltrated in the string, the rope, the film, the sheet, the cloth, the unwoven cloth or the paper set on a concrete.

The string, the rope, the film, the sheet, the cloth, the unwoven cloth or the paper to coat the agent on or infiltrate in is not limited to any particular kind of, provided that it retains the agent or allows the agent to infiltrate in. It is preferably easy to get wet rapidly with the agent. The material of film or sheet is preferable to be waterproof. The usable material includes polyester, polypropylene, polyethylene, vinyl chloride, polyurethane and rubber sheet. The string, the rope, the cloth, or the unwoven cloth also is preferably easy to get wet with the permeable water cut-off agent in order to infiltrate into. The example of the usable articles include a hemp rope, a cotton rope, a polyester rope, a cotton cloth, a polyester unwoven cloth and a rayon unwoven cloth. The paper is preferably strong enough to keep itself in shape even if it gets wet.

If the place of a water invading hole can be guessed, the water leakage preventive material of the present invention thus obtained can be put around the hole. If a water invading site is not clear, the leakage water cut-off material may be put in the wide range on the possible roof, floor or wall. It is not necessary to put all over the roof, floor or wall.

The leakage water cut-off agent of the present invention can infiltrate into a spongy substance to obtain the water leakage preventive material of the present invention.

In the leakage water cut-off agent of the present invention, the alkylene glycol derivative inhibits the water-absorptive polymer from swelling and gelatinization reaction (if gellant is contained). But invading water such as rainwater accelerates the swelling of the water-absorptive polymer and gel is formed by the reaction with the gellant if it is contained.

If a sufficient amount of water-absorptive polymer infiltrated into a spongy substance is placed in a construction joint or connection, where water leakage is likely to be caused, it closes the water leakage site by swelling and gelatinization of water absorptive polymer.

The water leakage preventive material of the present invention can be obtained by infiltrating the leakage water cut-off agent into a spongy substance. Therefore, the agent may be infiltrated into a spongy substance followed by drying to use, or may be infiltrated into the spongy substance after placing it in a water leakage site. Any kinds of the spongy substance may be used in the present invention and is preferably a urethane foam such as urethane sponge, a silicone foam such as silicone sponge, a synthetic rubber foam such as synthetic rubber sponge or a cellulose sponge such as cellulose sponge.

For soaking the spongy substance with the leakage water cut-off agent, the spongy substance, preferably in compressed state, can generally be immersed in the leakage water cut-off agent and then freed from the pressure, effecting the agent to infiltrate into the spongy substance rapidly.

The leakage water cut-off agent can also be coated on the spongy substance to infiltrate into by a coating machine or a brush.

Construction members may be connected by a common way at their faying surface where the spongy substance infiltrated by the leakage water cut-off agent of the present invention is put. In this case, there will be no problem even if the faying surface gets wet or damp. The construction members are preferably placed each other closer enough to have a smaller clearance than the thickness of the water leakage preventive material in order them to be compressed. The water leakage preventive material of the present invention can be compressed so that the waterproofing joint may fit the irregular faying surface with no space gap left. The thickness of the water leakage preventive material of the present invention is not limited to any one, but is practically 1-3cm.

The spongy substance may be used to form a waterproofing joint, into which the leakage water cut-off agent is then infiltrated, instead of the water leakage preventive material of the present invention prepared beforehand.

The water leakage preventive material of the present invention is preferably applied to a reinforced concrete flat roof. The roof is generally prepared with a combination of concrete joint waterproofing and membrane waterproofing such as asphalt waterproofing, sheet waterproofing and coated membrane waterproofing. So, the water leakage preventive material of the present invention can be applied to the waterproofing joint. The outer surface of the joint may be covered with asphalt, mortar or an elastic sealing material to prevent a roof surface from abrasion by walking and deterioration of the surface by light.

The water leakage preventive material of the present invention is preferably applied to a naked concrete floor. The material can be used to form a waterproofing joint in a concrete construction joint or connection area. The waterproofing joint is preferably covered with mortar to give a good appearance. The concrete construction connection is a boundary surface that is formed by adding to harden a fresh concrete in touch with another concrete that completes or starts hardening. So, the area is liable to become a water leakage site.

The leakage water cut-off material of the present invention is preferably applied to a naked concrete wall and is placed at the construction joint between the concretes. The outer surface of the joint in this case may be covered with asphalt, mortar or an elastic sealing material.

### EXAMPLE

The present invention will be described in details with reference to examples.

### Example A1

| | |
|---|---|
| (1) Polyethylene glycol | 500g |
| (Reagent made by Kanto Kagaku KK, m.w.7,400-9,000) | |
| (2) Water | 500g |
| (3) Sodium polyacrylate | 12.5g |
| (Trade name:Panakayaku-CP, made by NIPPON KAYAKU KK) | |

Polyethylene glycol (1) was gradually added to dissolve in water (2) under stirring. The water-absorptive polymer (3) was gradually added to disperse in the solution under stirring to obtain the leakage water cut-off agent of the present invention.

The measurement by the B type viscometer (made by Tokyo Keiki KK) showed that the leakage water cut-off agent had a viscosity of 1,030cP at 25°C.

Separately, the water-absorptive polymer (3) was added in water (2), and Polyethylene glycol (1) was then added in the solution to obtain the test sample, which was too highly viscous to measure the viscosity by the B type viscometer (made by Tokyo Keiki KK).

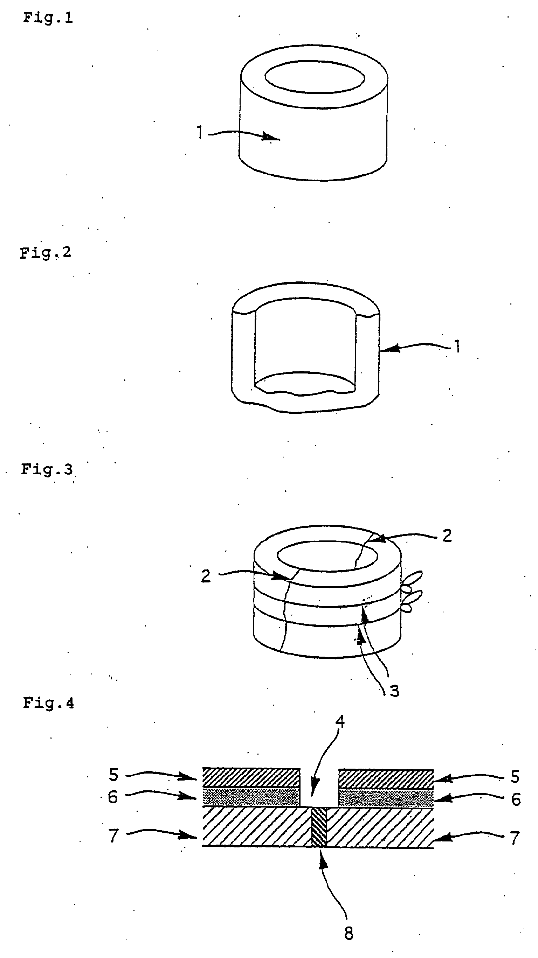

600g of water was added in 2.6Kg of the commercially-available sand-mixed cement (Trade name: Katei Cement, made by Tokyo Sun Home KK) to mix thoroughly, followed by packing in a mold-frame to solidify into the shape as shown in Fig.1.

This concrete container was bisected (as in Fig.2), and the two pieces were then unified again and reinforced with wire as in Fig.3. This container was filled with water, but immediately leaked water through the joint. The container was filled up with the leakage water cut-off agent of the present invention, left for 30 minutes, and emptied of the agent. The container was filled with water again, and it leaked no water through the joint. The container was filled up with water left for 3 days. It leaked no water through the joint.

The container treated with the leakage water cut-off agent of the present invention was emptied of water and dried at 60°C for 3 days. The container was filled with water again, and it leaked no water through the joint.

### Example A2

| | |
|---|---|
| (1) Polyethylene glycol | 500g |
| (Reagent made by Kanto Kagaku KK, m.w.1,300-1,600) | |
| (2) Water | 500g |
| (3) Sodium polyacrylate | 12.5g |
| (Trade name:Panakayaku-CP, made by NIPPON KAYAKU KK) | |

Polyethylene glycol (1) was gradually added to dissolve in water (2) under stirring. The water-absorptive polymer (3) was gradually added to disperse in the solution under stirring to obtain the leakage water cut-off agent of the present invention.

The measurement by the B type viscometer (made by Tokyo Keiki KK) showed that the leakage water cut-off agent had a viscosity of 540cP at 25°C.

Separately, the water-absorptive polymer (3) was added in water (2), and Polyethylene glycol (1) was then added in the solution to obtain the test sample, which was too highly viscous to measure the viscosity by the B type viscometer (made by Tokyo Keiki KK).

The same container as in Example A1 was filled up with the leakage water cut-off agent of the present invention, left for 30 minutes, and emptied of the agent. The container was filled up with water again, and it leaked no water through the joint. The container filled up with water left for 3 days. It leaked no water through the joint.

The container treated with the leakage water cut-off agent of the present invention was emptied of water and dried at 60°C for 3 days. The container was filled with water again, and leaked no water through the joint.

### Example A3

| | |
|---|---|
| (1) Polyethylene glycol | 500g |
| (Reagent made by Kanto Kagaku KK, m.w.7,400-9,000) | |
| (2) Water | 500g |
| (3) Carboxymethyl cellulose | 15.5g |
| (Trade name:CMC Daicel, made by Daicel Chem. Ind .KK) | |

Polyethylene glycol (1) was gradually added to dissolve in water (2) under stirring. The water-absorptive polymer (3) was gradually added to disperse in the solution under stirring to obtain the leakage water cut-off agent of the present invention.

The measurement by the B type viscometer (made by Tokyo Keiki KK) showed that the leakage water cut-off agent had a viscosity of 1,030cP at 25°C.

Separately, the water-absorptive polymer (3) was added in water (2), and Polyethylene glycol (1) was then added in the solution to obtain the test sample, which was too highly viscous to measure the viscosity by the B type viscometer (made by Tokyo Keiki KK).

The same container as in Example A1 was filled up with the leakage water cut-off agent of the present invention, left for 30 minutes and emptied of the agent. The container was filled up with water again, and leaked no water through the joint. The container filled up with water was left for 3 days. It leaked no water through the joint.

The container treated with the leakage water cut-off agent of the present invention was emptied of water and dried at 60°C for 3 days. The container was filled with water again, and leaked no water through the joint.

### Example B1

| | |
|---|---|
| (1) Polyethylene glycol | 100g |
| (Reagent made by Kanto Kagaku KK, m.w.7,400-9,000) | |
| (2) Water | 100g |
| (3) Bentonite | 25g |
| (Trade name:Benclay, made by Mizusawa Chem.Ind.KK) | |
| (4) Sodium polyacrylate | 2.5g |
| (Trade name:Panakayaku-CP, made by NIPPON KAYAKU KK) | |

Polyethylene glycol (1) was gradually added to dissolve in water (2) under stirring. The water-absorptive polymer (4) was gradually added to disperse in the solution under further stirring, followed by adding the gellant (3) to obtain the leakage water cut-off agent of the present invention.

The measurement by the B type viscometer (made by Tokyo Keiki KK) showed that the leakage water cut-off agent had a viscosity of 1,540cP at 25°C.

Separately, the water-absorptive polymer (4) was added in water (2), and Polyethylene glycol (1) was then added in the solution, followed by adding the gellant (3) to obtain the test sample, which was too highly viscous to measure the viscosity by the B type viscometer (made by Tokyo Keiki KK).

Separately, the gellant (3) was added in water (2), and the water-absorptive polymer(4) was then added, followed by adding Polyethylene glycol (1) to obtain the test sample, which was too highly viscous to measure the viscosity by the B type viscometer (made by Tokyo Keiki KK).

200g of water was added in 1.0Kg of the commercially-available sand-mixed cement (Trade name: Katei Cement, made by Tokyo Sun Home KK) to mix thoroughly, followed by packing in a mold-frame to solidify into the shape as shown in Fig.1.

This concrete container was bisected (as in Fig.2), and the two pieces were then unified again and reinforced with wire as in Fig. 3. This container was filled with water, but immediately leaked water through the joint. The container was filled with the leakage water cut-off agent of the present invention, left for 30 minutes, and emptied of the agent. The container was filled up with water again, and it leaked no water through the joint. The container filled up with water was left for 3 days. It leaked no water through the joint.

The container treated with the leakage water cut-off agent of the present invention was emptied of water and dried at 60°C for 3 days. The container was filled up with water again, and leaked no water through the joint.

### Example B2

| | |
|---|---|
| (1) Polyethylene glycol | 100g |
| (Reagent made by Kanto Kagaku KK, m.w.7,400-9,000) | |
| (2) Water | 100g |
| (3) Aluminium lactate | 8g |
| (4) Sodium polyacrylate | 2.5g |
| (Trade name:Panakayaku-CP, made by NIPPON KAYAKU KK) | |

Polyethylene glycol (1) was gradually added to dissolve in water (2) under stirring. The water-absorptive polymer (4) was gradually added to disperse in the solution under further stirring, followed by adding the gellant (3) to obtain the leakage water cut-off agent of the present invention.

The measurement by the B type viscometer (made by Tokyo Keiki KK) showed that the leakage water cut-off agent had a viscosity of 1,350cP at 25°C.

Separately, the water-absorptive polymer (4) was added in water (2), and Polyethylene glycol (1) was then added in the solution, followed by adding the gellant (3) to obtain the test sample, which was too highly viscous to measure the viscosity by the B type viscometer (made by Tokyo Keiki KK).

Separately, the gellant (3) was added in water (2), and the water-absorptive polymer(4) was then added, followed by adding Polyethylene glycol (1) to obtain the test sample, which was too highly viscous to measure the viscosity by the B type viscometer (made by Tokyo Keiki KK).

The same container as in Example B1 was filled up with the leakage water cut-off agent of the present invention and left for 30 minutes, and emptied of the agent. The container was filled up with water again, and it leaked no water through the joint. The container filled up with water was left for 3 days and leaked no water through the joint.

The container treated with the leakage water cut-off agent of the present invention was emptied of water and dried at 60°C for 3 days. The container was filled up with water again, and it leaked no water through the joint.

### Example B3

| | |
|---|---|
| (1) Polyethylene glycol | 100g |
| (Reagent made by Kanto Kagaku KK, m.w.7,400-9,000) | |
| (2) Water | 100g |
| (3) Bentonite | 28g |
| (Trade name:Benclay, made by Mizusawa Chem.Ind.KK) | |
| (4-1) Sodium polyacrylate | 1.5g |
| (Trade name:Panakayaku-CP, made by NIPPON KAYAKU KK) | |
| (4-2) Hydroxypropyl methyl cellulose | 2.5g |
| (Trade name: Metholose, made by Shinetsu Chem.Ind.KK) | |

Polyethylene glycol (1) was gradually added to dissolve in water (2) under stirring. The water-absorptive polymers (4-1)and (4-2) were gradually added to disperse in the solution under further stirring, followed by adding the gellant (3) under stirring to obtain the leakage water cut-off agent of the present invention.

The measurement by the B type viscometer (made by Tokyo Keiki KK) showed that the leakage water cut-off agent had a viscosity of 970cP at 25°C.

800g of water was added in 3.0Kg of the commercially-available sand-mixed cement (Trade name: Aso Katei Cement, made by Aso Cement KK) to mix thoroughly, followed by packing in a framework to solidify into the shape as shown in Fig.1.

This concrete container was bisected (as in Fig. 2), and the two pieces were then unified again and reinforced with wire as in Fig.3. This container was filled with water, but immediately leaked water through the joint. The inside surface of the container was coated with 20g of the leakage water cut-off agent of the present invention by a brush. After 1 hour, the container was filled up with water, and it leaked no water. The container was left for the further 30 minutes, emptied of water and dried at 60°C for 3 days. After cooling to the room temperature, the container was filled up with water again, and it leaked no water through the joint. The container filled with water was left for 3 days and it leaked no water through the joint.

### Example C1

| | |
|---|---|
| (1) Polyethylene glycol | 100g |
| (Reagent made by Kanto Kagaku KK, m.w.7,400-9,000) | |
| (2) Water | 100g |
| (3) Bentonite | 25g |
| (Trade name:Benclay, made by Mizusawa Chem.Ind.KK) | |
| (4) Sodium polyacrylate | 2.5g |
| (Trade name:Panakayaku-CP, made by NIPPON KAYAKU KK) | |
| (5) Sorbic acid (fungicide) | 0.5g |

Polyethylene glycol (1) was gradually added to dissolve in water (2) under stirring. The water-absorptive polymer (4) was gradually added to disperse in the solution under further stirring, followed by adding the gellant (3) to obtain A solution (a leakage water cut-off agent of the present invention containing no storage stabilizer).

Separately, the fungicide (5) was added in the A solution as prepared by the above process to obtain B solution which is a leakage water cut-off agent of the present invention containing a storage stabilizer.

The measurement by the B type viscometer (made by Tokyo Keiki KK) showed that both the A solution and the B solution had a viscosity of 1,540cP at 25°C.

The A solution containing no fungicide, after stored at the room temperature for 3 months, had a black speckle of substance as predicted as a fungus growing in the upper layer and had a decreased viscosity of 430cP. The B solution containing the fungicide, after also stored at the room temperature for 3 months, had a normal appearance and had a viscosity of 1,580cP.

Separately, the same container as in Example B1 was filled up with the leakage water cut-off agent of the present invention (the above B solution), left for 30 minutes, and emptied of the agent. The container was filled up with water again, and it leaked no water through the joint. The container filled with water was left for 3 days and leaked no water through the joint.

The container treated with the B solution was emptied of water and dried at 60°C for 3 days. The container was filled up with water again, and it leaked no water through the joint.

### Example C2

| | |
|---|---|
| (1) Polyethylene glycol | 70g |
| (Reagent made by Kanto Kagaku KK, m.w.7,400-9,000) | |
| (2) Water | 100g |
| (3) Aluminium lactate | 10g |
| (4) Sodium polyacrylate | 2.5g |
| (Trade name:Panakayaku-CP, made by NIPPON KAYAKU KK) | |
| (5) Dibutylhydroxytoluene (antioxidant) | 0.3g |

Polyethylene glycol (1) was gradually added to dissolve in water (2) under stirring. The water-absorptive polymer (4) was gradually added to disperse in the solution under further stirring, followed by adding and dissolving the gellant (3) to obtain C solution (a leakage water cut-off agent of the present invention containing no storage stabilizer).

Separately, the antioxidant (5) was added in the C solution as prepared by the above process and stirred to obtain D solution which is a leakage water cut-off agent of the present invention containing a storage stabilizer.

The measurement by the B type viscometer (made by Tokyo Keiki KK) showed that both the C solution and the D solution had a viscosity of 870cP at 25°C.

200g of water was added in 1.0Kg of the commercially-available sand-mixed cement (Trade name: Katei Cement, made by Tokyo Sun Home KK) to mix thoroughly, followed by packing in a mold-frame to solidify into the shape as shown in Fig.1.

This concrete container was bisected (as in Fig.2). The bottom of the crack was notched, and the two pieces were then unified again and reinforced with wire as in Fig.3. The joint had a gap of 0.4-2mm in the bottom. The container was returned to the bisection state. Unwoven cloth (Trade name: Vencot, made by Asahi Kasei KK) 0.85g was put between the joint surfaces, and the two pieces were then unified again and reinforced with wire as in Fig.3. The container was filled with water, and immediately leaked water through the joint. The container was returned to the bisection state. The above D solution 5g was infiltrated in unwoven cloth (Trade name: Vencot, made by Asahi Kasei KK) 0.85g and the unwoven cloth was put between the joint surfaces, and the two pieces were then unified again and reinforced with wire as in Fig.3. After 1 hour, the container was filled up with water, and it leaked no water. The container was left for the further 30 minutes, emptied of water and dried at 60°C for 5 days. After cooling to the room temperature, the container was filled up with water again, and leaked no water through the joint. The container filled with water was left for 5 days and it leaked no water through the joint.

Each unwoven cloth infiltrated by the C solution and the D solution respectively were left open for 3 months. The unwoven cloth infiltrated by the C solution got sticky and bad for processing. The sample by the D solution kept the dried shape and had no problem for processing.

### Example C3

| | |
|---|---|
| (1) Polyethylene glycol | 60g |
| (Reagent made by Kanto Kagaku KK, m.w.7,400-9,000) | |
| (2) Water | 100g |
| (3) Smectite | 20g |
| (Trade name:Smecton, made by Kunimine Ind.KK) | |
| (4-1) Sodium polyacrylate | 2.5g |
| (Trade name:Panakayaku-CP, made by NIPPON KAYAKU KK) | |
| (4-2) Hydroxypropyl methyl cellulose | 0.3g |
| (Trade name: Metholose, made by Shinetsu Chem.Ind.KK) | |
| (5) 2,4-dihydroxy benzophenone | 0.2g |
| (Ultraviolet absorption agent) | |

Polyethylene glycol (1) was gradually added to dissolve in water (2) under stirring. The water-absorptive polymers (4-1) and (4-2) were gradually added to disperse in the solution under further stirring, followed by adding and dissolving the gellant (3) to obtain E solution (a leakage water cut-off agent of the present invention containing no storage stabilizer).

Separately, the ultraviolet absorption agent (5) was added in the E solution as prepared by the above process and stirred to obtain F solution which is a leakage water cut-off agent of the present invention containing a storage stabilizer.

The measurement by the B type viscometer (made by Tokyo Keiki KK) showed that both the E solution and the F solution had a viscosity of 1,070cP at 25°C.

The E solution and the F solution respectively kept in glass vessel were stored in a sunlight room for 3 months. The E solution got separated and had a decreased viscosity of 640cP. The F solution had a normal appearance and had a viscosity of 1,130cP.

200g of water was added in 1.0Kg of the commercially-available sand-mixed cement (Trade name: Katei Cement, made by Tokyo Sun Home KK) to mix thoroughly, followed by packing in a mold-frame to solidify into the shape as shown in Fig.1.

This concrete container was bisected (as in Fig.2). The bottom of the crack was notched, and the two pieces were then again combined together and reinforced with wire as in Fig.3. The joint had a gap of 0.2-3mm in the bottom. A polyester film (Trade name: Toyobo Ester film, made by Toyo Boseki KK) having a length of 40cm, a width of 3cm and a thickness of 16 micron was coated with the above F solution to have a thickness of 0.5mm on the hydrophilized surface of the film, and without drying the film, was stuck on the joint in the above concrete container. The container was left at the room temperature for 3 days to dry and filled up with water. It leaked no water.

The container was left for further 30 minutes, emptied of water and dried at 60°C for 3 days. After cooling to the room temperature, the container was filled up with water again, and it leaked no water through the joint. The container filled with water was left for 3 days and it leaked no water through the joint.

### Example C4

| | |
|---|---|
| (1) Polyethylene glycol | 80g |
| (Reagent made by Kanto Kagaku KK, m.w.7,400-9,000) | |
| (2) Water | 100g |
| (3) magnesium acetate | 12g |
| (Reagent, made by Wako Junyaku Ind.KK) | |
| (4) Sodium polyacrylate | 2.2g |
| (Trade name:Panakayaku-CP, made by NIPPON KAYAKU KK) | |
| (5) Dibutylhydroxytoluene (antioxidant) | 0.3g |

Polyethylene glycol (1) was gradually added to dissolve in water (2) under stirring. The water-absorptive polymers (4) was gradually added to disperse in the solution under further stirring, followed by adding the gellant (3) and the antioxidant (5) and stirring to obtain the leakage water cut-off agent of the present invention containing a storage stabilizer.

The measurement by the B type viscometer (made by Tokyo Keiki KK) showed that the leakage water cut-off agent had a viscosity of 1,140cP at 25°C.

Separately the inside surface of the same concrete container as in Example B3 was coated with 20g of the above leakage water cut-off agent of the present invention by a brush. After 1 hour, the container was filled up with water, and it leaked no water. The container was left for 30 minutes, emptied of water and dried at 60°C for 3 days. After cooling to the room temperature, the container was filled up with water again, and it leaked no water through the joint. The container filled with water was left for 3 days and it leaked no water through the joint.

### Example D1

There was a water leakage from the top flat roof of a three-storied reinforced concrete building. The roof had a reinforced slab-concrete waterproofed with asphalt joint, over which a foamed styrol of heat insulating material (4cm thick) and a heat insulating material-stopping concrete (7cm thick) had been set to pile up (Fig.4). An opening (1cm wide×1cm long×11cm deep)for injecting a leakage water cut-off agent was set in the water leakage site to arrive at the a waterproofing asphalt joint in the slab-concrete through the heat insulating material-holding concrete and the heat insulating material. The leakage water cut-off agent 1kg having the same composition as in Example B3 was injected, and then 20liters of water were injected. It rained 3 days after, but there was no water leakage in the roof.

### Example D2

There was a water leakage from the wall of the underground path in a reinforced concrete building. The wall was constructed with a reinforced slab-concrete in the inside of the angle stopping wall and its surface was waterproofed by coating.

The openings for injecting a leakage water cut-off agent were set to scatter along the both sides of the crack in the surface of the wall. The leakage water cut-off agent 1kg having the same composition as in Example C4 was injected under a high pressure. It kept raining for 3 days, but there was no water leakage from the wall.

### Example E1

| | |
|---|---|
| (1) Polyethylene glycol | 100g |
| (Reagent made by Kanto Kagaku KK, m.w.7,400-9,000) | |
| (2) Water | 100g |
| (3) Bentonite | 25g |
| (Trade name:Bengel, made by Hojun Kogyo KK) | |
| (4) Sodium polyacrylate | 2.5g |
| (Trade name:Panakayaku-CP, made by NIPPON KAYAKU KK) | |

Polyethylene glycol (1) was gradually added to dissolve in water (2) under stirring. The water-absorptive polymer (4) was gradually added to disperse in the solution under further stirring, followed by adding the gellant (3) to obtain the leakage water cut-off agent of the present invention.

Water 800g was added in 3.0Kg of the commercially-available sand-mixed cement (Trade name: Aso Katei Cement, made by Aso Cement KK) to mix thoroughly, followed by packing in a mold-frame to solidify into the shape as shown in Fig.1.

This concrete container was bisected (as in Fig.2). The bottom of the crack was further notched, and the two pieces were then unified again and reinforced with wire as in Fig.3. The joint had a gap of 1.8-1.1cm in the bottom. The container was returned to the bisection state. An oily coking material(Trade name: Polycoke, made by Cemedyne KK) was coated on the side contact surface of the joint, and a silicone sponge (2.5cm×2.5cm sectional×12cm long; density:0.35g/cm³ ) was put between the bottom surfaces of the joint, and the two pieces were then unified again and reinforced with wire as in Fig.3. The container was filled with water, and it immediately leaked water through the joint. The container was emptied of water, and 30g of the above leakage water cut-off agent was contained in the container and infiltrated into the silicon sponge. After 1 hour, the container was filled up with water again, and it leaked no water through the joint. The container was left for the further 24 hours and observed. No trace of water leakage was found in the container bottom.

The container was emptied of water and dried at 60°C for 3 days. After cooling to the room temperature, the container was filled up with water again, and it leaked no water through the joint. The container filled up with water was left for the further 3 days and it leaked no water through the joint.

### Example E2

| | |
|---|---|
| (1) Polyethylene glycol | 100g |
| (Reagent made by Kanto Kagaku KK, m.w.7,400-9,000) | |
| (2) Water | 130g |
| (3) Smectite | 30g |
| (Trade name:Synthtic smectite, made by Cope Chem.KK) | |
| (4-1) Sodium polyacrylate | 1.8g |
| (Trade name:Panakayaku-CP, made by NIPPON KAYAKU KK) | |
| (4-2) Polyvinyl alcohol | 0.5g |
| (Trade name: RS-117, made by KK Kurare) | |

Polyethylene glycol (1) was gradually added to dissolve in water (2) under stirring. The water-absorptive polymers (4-1) and (4-2) were gradually added to disperse in the solution under further stirring, followed by adding to dissolve the gellant (3) to obtain the leakage water cut-off agent of the present invention.

The above leakage water cut-off agent 12g was infiltrated into an urethane sponge (2.5cm × 2.5cm sectional × 12cm long; density:0.25g/cm³ ) and then dried at 50°C for 24 hours to obtain the water leakage preventive material of the present invention.

Separately, a concrete cracked container was prepared as in Example E1 so that the joint might have a gap of 1.6-0.8cm in the bottom. The container was returned to the bisection state. The above water leakage preventive material was put between the bottom surfaces of the joint, and an oily coking material(Trade name: Polycoke, made by Cemedyne KK) was coated on the side contact surface of the joint, and the two pieces were then unified again and reinforced with wire as in Fig.3. The container was filled with water, and it leaked no water through the joint. The container was left for the further 24 hours and observed. No trace of water leakage was found in the bottom.

The container was emptied of water and dried at 60°C for 3 days. After cooling to the room temperature, the container was filled up with water again, and it leaked no water through the joint. The container filled up with water was left for 3 days and it leaked no water through the joint.

### Example E3

A leakage water cut-off material of the present invention was prepared as in Example E1, but 0.4g of dibutyl hydroxy toluene (antioxidant) was further added. The antioxidant was added after the components (1)-(4) were mixed as in Example E1.

Separately, a concrete cracked container was prepared as in Example E1 so that the joint might have a gap of 1.8-1.1cm in the bottom. A silicone sponge (2.5cm × 2.5cm sectional × 12cm long; density:0.35g/cm³ )was put between the bottom surfaces of the joint, and the two pieces were then unified again and reinforced with wire as in Fig.3. The above composition 30g was added in the container to infiltrate into the silicone sponge. After 1 hour, the container was filled up with water, and it leaked no water. The container was left for 24 hours and observed. No trace of water leakage was found in the container bottom.

The container was emptied of water and dried at 60°C for 3 days. After cooling to the room temperature, the container was filled up with water again, and it leaked no water through the joint. The container filled up with water was left for 3 days and it leaked no water through the joint.

### Example E4

A leakage water cut-off material of the present invention was prepared as in Example E2, but 0.3g of 2,4-dihydroxybenzophenone (ultraviolet absorption agent) was further added. The ultraviolet absorption agent was added after the components (1)-(4-2) were mixed as in Example E2.

The above composition 12g was infiltrated into an urethane sponge as in Example E2 and then dried at 50°C for 24 hours to obtain the water leakage preventive material of the present invention.

Separately, a concrete cracked container was prepared as in Example E2. The container was returned to the bisection state again. The above water leakage preventive material was put between the bottom surfaces of the joint, and an oily coking material(Trade name: Polycoke, made by Cemedyne KK) was coated on the side contact surface of the joint, and the two pieces were then unified again and reinforced with wire as in Fig.3. The container was filled with water, and it leaked no water. The container was left for 24 hours. No trace of water leakage was found in the container bottom observed thereafter.

The container was emptied of water and dried at 60°C for 3 days. After cooling to the room temperature, the container was filled up with water again, and it leaked no water through the joint. The container filled p with water was left for 3 days and it leaked no water through the joint.

### Example F1

| | |
|---|---|
| (1) Polyethylene glycol | 100g |
| (Reagent made by Kanto Kagaku KK, m.w.7,400-9,000) | |
| (2) Water | 100g |
| (3) Bentonite | 25g |
| (Trade name:Benclay, made by Mizusawa Chem.Ind.KK) | |
| (4) Sodium polyacrylate | 2.5g |
| (Trade name:Panakayaku-CP, made by NIPPON KAYAKU KK) | |
| (5) Sodium alginate | 2.5g |
| (Trade name: Kimitsu algine, made by Kimitsu Chem.Ind.KK) | |
| (6) Silicasol | 30g |
| (colloidal silica dispersion solution) | |
| (Trade name: Snowtex30, solid: 30% by weight, made by Nissan Chem. Ind. KK ) | |
| (7) Sorbic acid (fungicide) | 0.5g |
| (Reagent, made by Wako Junyaku Ind.KK) | |

Polyethylene glycol (1) was gradually added to dissolve in water (2) under stirring. The water-absorptive polymers (4) and (5) in order were gradually added to disperse in the solution under stirring, followed by adding the silicasol(6) and further the gellant (3) under stirring, to obtain A solution (a leakage water cut-off agent of the present invention containing no storage stabilizer).

Separately, the fungicide (7) was added in the A solution as prepared by the above process to obtain B solution which is a leakage water cut-off agent of the present invention containing a storage stabilizer.

The measurement by the B type viscometer (made by Tokyo Keiki KK) showed that both the A solution and the B solution had a viscosity of 1,540cP at 25°C.

The above A solution, after stored at the room temperature for 2 weeks, had a black speckle of substance as predicted as a fungus growing in the upper layer and had a decreased viscosity of 780cP. The B solution, after also stored at the room temperature for 3 months, had a normal appearance and had a viscosity of 1,580cP.

Separately, the same container as in Example B1 was filled up with the leakage water cut-off agent of the present invention (the above B solution), left for 30 minutes, and emptied of the agent. The container was filled up with an aqueous 3% sodium chloride solution, and it leaked no water through the joint. The container filled up with water was left for 3 days and it leaked no water through the joint.

The container treated with the B solution was emptied of water and dried at 60°C for 3 days. The container was filled up with water again, and it leaked no water through the joint.

### Example F2

| | |
|---|---|
| (1) Polyethylene glycol | 100g |
| (Reagent made by Kanto Kagaku KK, m.w.7,400-9,000) | |
| (2) Water | 100g |
| (3) Bentonite | 25g |
| (Trade name:Benclay, made by Mizusawa Chem.Ind.KK) | |
| (4) Sodium polyacrylate | 2.5g |
| (Trade name:Panakayaku-CP, made by NIPPON KAYAKU KK) | |
| (5) Guar gum | 2.5g |
| (Trade name: Guar gum, made by Organo KK) | |
| (6) Silicasol | 30g |
| (colloidal silica disperse solution) | |
| (Trade name: Snowtex30, solid:30% by weight, made by Nissan Chem. Ind. KK ) | |
| (7) o-phenyl phenol (fungicide) | 0.5g |
| (Reagent, made by Kanto Kagaku KK) | |

Polyethylene glycol (1) was gradually added to dissolve in water (2) under stirring. The water-absorptive polymers (4) and (5) were gradually added to disperse in the solution under further stirring, followed by adding the silicasol(6) under stirring and further adding the gellant (3) and stirred to obtain A solution (a leakage water cut-off agent of the present invention containing no storage stabilizer).

Separately, the fungicide (7) was added in the A solution as prepared by the above process to obtain B solution which is a leakage water cut-off agent of the present invention containing a storage stabilizer.

The measurement by the B type viscometer (made by Tokyo Keiki KK) showed that both the A solution and the B solution had a viscosity of 1,280cP at 25°C.

The above A solution, after stored at the room temperature for 2 weeks, had a black speckle of substance as predicted as a fungus growing in the upper layer and had a decreased viscosity of 840cP and smelled. On the other hand, the B solution, after also stored at the room temperature for 3 months, had a normal appearance and had a viscosity of 1,350cP.

Separately the same container as in Example B1 was filled up with the leakage water cut-off agent of the present invention (the above B solution), left for 30 minutes, and emptied of the agent. The container was filled up with an aqueous 3% sodium chloride solution, and it leaked no water through the joint. The container filled with water was left for 3 days and it leaked no water through the joint.

The container treated with the B solution was emptied of water and dried at 60°C for 3 days. The container was filled up with water again, and it leaked no water through the joint.

### Example F3

| | |
|---|---|
| (1) Polyethylene glycol | 100g |
| (Reagent made by Kanto Kagaku KK, m.w.7,400-9,000) | |
| (2) Water | 100g |
| (3) Bentonite | 25g |
| (Trade name:Benclay, made by Mizusawa Chem.Ind.KK) | |
| (4) Sodium polyacrylate | 2.5g |
| (Trade name:Panakayaku-CP, made by NIPPON KAYAKU KK) | |
| (5) Agar | 2.5g |
| (Trade name: Ina agar, made by Ina Food Ind.KK) | |
| (6) Silicasol | 30g |
| (colloidal silica dispersion solution) | |
| (Trade name: Snowtex30, solid:30% by weight, made by Nissan Chem. Ind. KK ) | |
| (7) Thiabendazol (fungicide) | 0.5g |
| (Reagent, made by Tokyo Kasei Ind.KK) | |

Polyethylene glycol (1) was gradually added to dissolve in water (2) under stirring. The water-absorptive polymers (4) and (5) were gradually added to disperse in the solution under further stirring, followed by adding the silicasol(6) under stirring and further adding the gellant (3) to obtain A solution (a leakage water cut-off agent of the present invention containing no storage stabilizer).

Separately, the fungicide (7) was added in the A solution as prepared by the above process to obtain B solution which is a leakage water cut-off agent of the present invention containing a storage stabilizer.

The measurement by the B type viscometer (made by Tokyo Keiki KK) showed that both the A solution and the B solution had a viscosity of 1,220cP at 25°C.

The above A solution, after stored at the room temperature for 2 weeks, had a black speckle of substance as predicted as a fungus growing in the upper layer and had a decreased viscosity of 660cP. On the other hand, the B solution, after also stored at the room temperature for 3 months, had a normal appearance and had a viscosity of 1,320cP.

Separately, the same container as in Example B1 was filled up with the leakage water cut-off agent of the present invention (the above B solution), left for 30 minutes, and emptied of the agent. The container was filled up with an aqueous 3% sodium chloride solution, and it leaked no water through the joint. The container filled with water was left for 3 days and it leaked no water through the joint.

The container treated with the B solution was emptied of water and dried at 60°C for 3 days. The container was filled up with water again, and leaked no water through the joint.

### INDUSTRIAL APPLICABILITY

A leakage water cut-off agent (material) of the present invention has an excellent function for water leakage prevention, is easy to control the viscosity, and is excellent in storage stability. For example, the leakage water cut-off agent (material), if applied to the crack of a mortar or concrete product, is swelled by water invading through the crack, and can close the crack quickly to prevent another water from invading inside. The agent (material) does not freeze even in a cold district. According to a method of the present invention for preventing water leakage, the leakage water cut-off agent injected into an opening set in a construction can arrive at the water leakage site surely to prevent water from invading inside.

Therefore, the present invention allows sure waterproofing, and can prevent the mortar or concrete product from further expanding of the crack and the deterioration. So, the present invention is useful for prolonging the life of a mortar or concrete product such as a construction.

## Claims

1. A leakage water cut-off agent comprising (a) a water-absorptive polymer dispersed without swelling in (b) a dispersing medium containing alkylene glycol derivatives having repeated units of 2 carbon atoms or more as the indispensable component.

2. A leakage water cut-off agent according to Claim 1 further comprising (c) a gellant of water-absorption polymer.

3. A leakage water cut-off agent according to Claim 1 or 2, wherein said gellant is a compound which can release a 2 or more valences of metal cation in water or has a cation-exchange capacity in water.

4. A leakage water cut-off agent according to Claim 1 or 2 further comprising a storage stabilizer.

5. A leakage water cut-off agent according to any one of Claims 1 to 4, wherein said water-absorptive polymer contains a highly water-absorptive polymer and a water-absorptive natural polymer.

6. A leakage water cut-off agent according to Claim 5, wherein said high water-absorptive polymer is at least one selected from the group consisting of poly (meth)acrylic acid derivatives, alginic acid derivatives, starch derivatives, poly-N-vinylacetamide derivatives, polyvinylalcohol derivatives and cellulose derivatives.

7. A leakage water cut-off agent according to Claim 5 or 6, wherein said water-absorptive natural polymer is at least one selected from the group consisting of alginic acid, sodium alginate and guar gum.

8. A leakage water cut-off agent according to any one of Claims 1 to 7, wherein said alkylene glycol derivatives comprise at least one selected from the group consisting of polyethylene glycol, polypropylene glycol and polybutylene glycol.

9. A leakage water cut-off agent according to any one of Claims 1 to 8 comprising water.

10. A method for manufacturing the leakage water cut-off agent according to Claim 9 **characterized by** that (a) said water-absorptive polymer is added to disperse in the aqueous solution of (b) said alkylene glycol derivative having repeated units of 2 carbon atoms or more.

11. A leakage water cut-off material **characterized by** that the leakage water cut-off agent according to any one of Claims 1 to 10 is infiltrated in a spongy substance.

12. A leakage water cut-off material according to Claim 11, wherein said spongy substance is at least one selected from the group consisting of an urethane foam, a silicon resin foam, a synthetic rubber foam and a cellulose sponge.

13. A leakage water cut-off material comprising at least one selected from the group consisting of string, rope, film, sheet, cloth, unwoven fabric and paper, which is coated or infiltrated by the leakage water cut-off agent according to any one of Claims 1 to 10.

14. A method for preventing water leakage **characterized by** that the water leakage preventive material according to any one of Claims 11 to 13 is placed to the water leakage pathway of a construction.

15. A method for preventing water leakage according to Claim 14, wherein said water leakage pathway is a joint sarface or faying surface of concrete.

16. A method for preventing water leakage **characterized by** that the leakage water cut-off agent according to any one of Claims 1 to 10 is injected into the injecting holes set in a concrete construction.

17. A method for preventing water leakage according to Claim 16, wherein said injecting holes are set in zigzag along the both sides of a crack.
